# EUROPÄISCHE PATENTSCHRIFT

(11) **EP 4 460 642 B1**
(45) Veröffentlichungstag und Bekanntmachung des Hinweises auf die Patenterteilung: **29.04.2026**
(21) Anmeldenummer: 23700412.2
(22) Anmeldetag: 04.01.2023
(51) Int. Cl.: F16B 19/10, F16B 21/16, F16B 1/00

(54) **VERRIEGELUNGSSYSTEM ZUM LÖSBAREN VERBINDEN VON ZWEI KOMPONENTEN EINES SYSTEMS**
LOCKING SYSTEM FOR RELEASABLY CONNECTING TWO COMPONENTS OF A SYSTEM
SYSTÈME DE VERROUILLAGE POUR RELIER DE MANIÈRE AMOVIBLE DEUX ÉLÉMENTS D'UN SYSTÈME

(30) Priorität: 07.01.2022 DE 102022100283
(43) Veröffentlichungstag der Anmeldung: 13.11.2024
(73) Patentinhaber: DResearch Fahrzeugelektronik GmbH, 12681 Berlin (DE)
(72) Erfinder: WEBER, Michael, 12683 Berlin (DE)
(74) Vertreter: Eisenführ Speiser
(86) Internationale Anmeldenummer: PCT/EP2023/050102
(87) Internationale Veröffentlichungsnummer: WO 2023/131617

(56) Entgegenhaltungen:
- GB-A- 2 444 933
- US-A1- 2016 017 905

## Beschreibung

Die Erfindung betrifft ein Verriegelungssystem zum lösbaren Verbinden von zwei Komponenten eines Systems.

Verbindungssysteme sind ein wichtiger Bestandteil von vielen technischen Systemen, um jeweils separate und unabhängige Teilsysteme miteinander zu verbinden. Da die Art der Verbindung häufig lediglich eine untergeordnete Rolle spielt, sollte sie möglichst einfach zu bedienen sein und ohne größere Kosten realisierbar sein.

Einfache Verbindungssysteme weisen beispielsweise eine für den Benutzer intuitive Bedienweise auf und lassen sich dabei ohne größere Anstrengungen derart einsetzen, dass die gewünschte sichere Verbindung entsprechend bereitstellbar ist.

Im Stand der Technik sind deshalb bereits unterschiedlichste Steckverbindungssysteme bekannt, welche gemäß ihrer rein mechanischen Bedienweise die zuvor gewünschten Kriterien aufweisen.

US 2016/017905 A1 beschreibt einen magnetisch betätigten Verriegelungsmechanismus, der einen Dauermagneten aufweist, um eine verriegelbare Stange an dem magnetischen Verriegelungsmechanismus zu befestigen.

GB 2 444 933 A beschreibt ein elektromagnetisch betätigtes Schloss mit einem festen Element und einem beweglichen Element. Das feste Element besteht aus einem Magneten mit offenem Rahmen.

Für bestimmte Einsätze haben sich rein mechanisch vorgesehene Kugelsperrbolzensysteme als praktisch erwiesen. Nachfolgend wird aus dem Stand der Technik ein Beispiel näher vorgestellt.

So ist aus der EP 1 707 826 B1 ein Kugelsperrbolzen als bekannt zu entnehmen. Die Offenbarung zeigt einen Kugelsperrbolzen zur lösbaren Befestigung an einem eine Öffnung mit einer Hinterschneidung aufweisenden Gegenstand, mit einem eine Führungsaufnahme aufweisenden Fixierbolzen, der mit einem Griff versehen ist und an seinem dem Griff gegenüberliegenden, freien Ende mindestens ein Verriegelungselement aufweist, das durch einen relativ zum Fixierbolzen in der Führungsaufnahme gegen die Kraft einer am Fixierbolzen abgestützten Feder verschiebbaren Stößel aus einer den Durchtritt des Fixierbolzens durch die Öffnung sperrenden Sperrstellung in eine den Durchtritt freigebende, in eine Ausnehmung des Stößels reichende Lösestellung verstellbar ist. Der Stößel ist dabei aus der Führungsaufnahme durch den Griff hindurch aus dem Fixierbolzen herausgeführt, wobei die Feder durch einen elastisch verformbaren Steg des Griffes gebildet ist, der dem aus der Führungsaufnahme herausragenden Ende des Stößels anliegt.

Die meisten rein mechanischen Verbindungssysteme sind in ihrem Anwendungsbereich auf einfache Aufgabenbereiche eingeschränkt. Es fehlt ihnen insofern an einer gewissen Flexibilität für einen interaktiven Einsatz mit den zu verbindenden Systemen. Mit der zunehmenden Vernetzung und auch Digitalisierung von Gegenständen und Arbeitsverfahren besteht aktuell ein wachsender Bedarf an Lösungen, welche sich in diese Entwicklung möglichst nahtlos einpflegen lassen. Für Verbindungssysteme gilt dies im gleichen Maße.

Der Erfindung liegt nun die Aufgabe zugrunde, ein Verriegelungssystem bereitzustellen, welches die zuvor geschilderten Nachteile zumindest teilweise überwindet.

Erfindungsgemäß wird ein Verriegelungssystem gemäß Anspruch 1 bereitgestellt. Weitere Ausgestaltungen der Erfindung sind in den Ansprüchen 2 bis 11 beschrieben.

Erfindungsgemäß ist vorgesehen, dass ein Verriegelungssystem zum lösbaren Verbinden von zwei Komponenten eines Systems bereitgestellt wird. Solch ein Verriegelungssystem umfasst dabei eine Einsteckvorrichtung mit einem Kugelsperrbolzensystem und eine die Einsteckvorrichtung aufnehmende Aufnahmevorrichtung, wobei die Aufnahmevorrichtung ausgelegt ist, die Einsteckvorrichtung derart aufzunehmen, dass die Einsteckvorrichtung beim Einführen in die Aufnahmevorrichtung mittels des Kugelsperrbolzensystems in einen verriegelten Zustand in der Aufnahmevorrichtung bewegbar ist. Die Einsteckvorrichtung ist mit einer ersten Komponente und die Aufnahmevorrichtung mit einer zweiten Komponente des Systems verbunden. Mittels einer elektrisch bedienbaren Auslöseeinheit des Verriegelungssystems ist der verriegelte Zustand der Einsteckvorrichtung in der Aufnahmevorrichtung aufhebbar, sodass die Einsteckvorrichtung aus der Aufnahmevorrichtung entfernbar ist.

Auf diese Weise ist es möglich, ein Verriegelungssystem bereitzustellen, mit welchem die oben geschilderten Nachteile von rein mechanischen Systemen zumindest teilweise überwunden werden.

Diese klare Strukturierung des Verriegelungssystems begünstigt, dass es auch bei schnellen Verriegelungsprozessen stets zu einer gewünschten Verriegelung der zwei zu verriegelnden Komponenten, sprich der Einsteckvorrichtung und der aufnehmenden Aufnahmevorrichtung, kommt. Diese Komponenten sind beispielsweise an jeweiligen zu verbindenden Systemen gekoppelt oder sogar im Wesentlichen an diesen angeordnet, beispielsweise zumindest teilweise reversibel lösbar befestigt. Auch eine permanente Verortung dieser Komponenten mit dafür geeigneten Befestigungsmitteln an den jeweiligen zu verbindenden Systemen ist vorstellbar. Das vorgestellte Verriegelungssystem weist hierfür eine ausreichende Flexibilität aufgrund seines im Wesentlichen modularen Aufbaus auf.

Die aufzubringende Kraft zum Aufheben der Verriegelung wird dabei ausschließlich von der elektrisch bedienbaren Auslöseeinheit aufgebracht. Somit ist es möglich, allein durch das Anlegen einer entsprechenden elektrischen Spannung diesen Vorgang zu bewirken. Das vorgestellte Verriegelungssystem ist dabei so ausgelegt, dass durch eine entsprechende mechanische Gestaltung des Verbindungsmechanismus keine andere Möglichkeit zur Lösung der Verbindung besteht. Somit besteht der Vorteil in einem sehr einfach zu bedienenden System, welches zudem aufgrund der elektrisch bedienbaren Auslöseeinheit eine Vielzahl von Kopplungsmöglichkeiten zu weiteren Funktionen der zu verbindenden Komponenten bietet. Dabei ist das vorgestellte Verriegelungssystem gleichzeitig kompakt und bietet die Möglichkeiten je nach Einsatzgebiet eine flexible Gestaltung von einzusetzenden Materialien zu erlauben. Vorteilhaft werden die besonderen Vorzüge des Kugelsperrbolzensystems genutzt, um sie in auf bisher nicht dagewesene Weise zu einem wesentlich komplexeren und überraschend neuen System zu überführen. Die Form des Auslösemechanismus in Verbindung mit den Vorzügen des Kugelsperrbolzensystems bietet zudem den Vorteil, dass ein besonders verschleißarmes Verriegelungssystem bereitstellbar ist. Auch ist die überraschend effektive Verbindung der einzelnen Komponenten preiswert erreichbar, sodass auf vorteilhafte Weise somit auch ein kostengünstiges Verriegelungssystem bereitstellbar ist. Je nach Beschaffenheit der ausgewählten Materialien ist es mit dem vorgestellten System möglich, auch größere Verbindungskräfte bereitzustellen. Die einzelnen Komponenten sind dabei flexibel dimensionierbar und die Funktionalität der elektrisch bedienbaren Auslöseeinheit kann beispielsweise mithilfe einer geeigneten Elektronikschaltung zusätzlich vorteilhaft benutzerdefiniert angepasst werden. Die grundlegende bereitgestellte Funktionalität des vorgestellten Verriegelungssystems bleibt dabei jedoch auch in den unterschiedlichsten Variationen hinsichtlich einer für den jeweiligen Anwendungszweck geeigneten Dimensionierung stets gleich.

In weiterer bevorzugter Ausgestaltung der Erfindung ist vorgesehen, dass ein System bereitgestellt wird, welches ein Verriegelungssystem nach einem der Ansprüche 1 bis 11 umfasst. Die zuvor genannten Vorteile gelten, soweit übertragbar, auch für das vorgestellte System.

Weitere bevorzugte Ausgestaltungen der Erfindung ergeben sich aus den übrigen, in den Unteransprüchen genannten Merkmalen.

So ist in einer weiteren Ausgestaltung der Erfindung vorgesehen, dass die elektrisch bedienbare Auslöseeinheit wenigstens eine elektromagnetische Vorrichtung, insbesondere eine Hubmagnetvorrichtung, umfasst.

Die zuvor genannten Vorteile sind somit besonders gut und effektiv erreichbar. Die Positionierung der genannten Komponenten ist dabei stets so zu treffen, dass die gewünschte Funktionalität hinsichtlich eines definierten Entriegelungsvorgangs mittels der elektrisch bedienbaren Auslöseeinheit gewährleistbar ist. Je nachdem, welche Haltekräfte aufzubringen sind, ist eine Dimensionierung und Materialauswahl der kräfteaufnehmenden Komponenten vorzusehen. Dementsprechend ist auch der Hubmagnet zu dimensionieren, der die Kraft für eine sichere Entriegelung aufbringen muss. Diese Bedingung knüpft sich nahtlos an den bisherigen Offenbarungsgehalt an und ist somit als eine klar ausführbare Lehre anzusehen.

Auch ist in einer weiteren Ausgestaltung der Erfindung vorgesehen, dass die elektrisch bedienbare Auslöseeinheit ausgelegt ist, nach Erhalt eines Auslösesignals die Verriegelung nach einem benutzerdefiniert einstellbaren Zeitintervall und/oder nach einem Erreichen von einer benutzerdefinierten Bedingung, aufzuheben.

Das Auslösesignal kann beispielsweise mit einem für diese Zwecke ausgestalteten Bedienelement vorgesehen sein. Beispielsweise kann ein einfacher Druckknopf, welcher entsprechend ein Signal an die vorgesehene Elektronik sendet, vorgesehen sein, sodass die elektrisch bedienbare Auslöseeinheit den gewünschten Entriegelungsvorgang bewirkt.

Das Erreichen einer nutzerdefinierten Bedingung kann beispielsweise in Form einer erfolgreich geprüften Zugriffsberechtigung vorliegen. Auch ist denkbar, dass die nutzerdefinierte Bedingung das Resultat eines positiven Freigabeprozesses, etwa eines Datenträgers, ist.

Statt eines Druckknopfes sind auch jegliche weitere Alternativen vorstellbar, welche geeignet sind, die beanspruchte Lehre technisch zu realisieren.

In diesem Zusammenhang ist das Auslösesignal beispielsweise das Resultat eines vorangegangenen Entriegelungsvorgangs. Zunächst besteht dabei zumindest eine Entriegelungsanforderung. Es werden dann die Entriegelungsvoraussetzungen geprüft. Je nach Ergebnis dieser Prüfung erfolgt dann ein Auslösesignal, welches letztendlich zu einem erfolgreichen Entriegelungsvorgang führt oder eben nicht. Dabei kann eine Entriegelungsanforderung manuell oder auch automatisch erfolgen. Eine manuelle Entriegelungsanforderung kann etwa mittels eines Tasters, eines Schalters, eines mechanischen oder auch eines elektronischen Schlüssels oder dergleichen erfolgen. Eine automatische Entriegelungsanforderung kann etwa insbesondere durch einen externen Prozess ausgelöst werden.

Die Prüfung der Entriegelungsvoraussetzungen kann in diesem Zusammenhang etwa abhängig vom jeweiligen Anwendungsfall sein. Dies kann etwa so gestaltet sein, dass eine Prüfung hinsichtlich einer Berechtigung einer anfordernden Person, welche etwa einen elektronischen Schlüssel benutzt, erfolgt. Auch ist vorstellbar, dass geprüft wird, ob ein für die Entriegelung erforderlicher Systemzustand eines Systems, in welchem das vorgestellte Verriegelungssystem eingebaut ist, vorliegt. So ein Systemzustand eines Systems kann etwa vorliegen, wenn alle Schreibvorgänge auf einem Datenträger abgeschlossen sind.

Ferner ist in einer weiteren Ausgestaltung der Erfindung vorgesehen, dass die elektrisch bedienbare Auslöseeinheit ausgelegt ist, nach Erhalt eines Auslösesignals und in Abhängigkeit eines von einer systemeigenen oder systemexternen Entriegelungsvorrichtung detektierten Status einer benutzerdefiniert einstellbaren Bedingung die Verriegelung aufzuheben.

Solch ein detektierter Status ist beispielsweise so vorgesehen, dass gemäß der Position eines übergeordneten Schalters eine generelle Aktivierung der elektrisch bedienbaren Auslöseeinheit bewirkbar ist. Mit anderen Worten ist somit festlegbar, ob überhaupt eine Entriegelung möglich ist oder eben nicht. Die benutzerdefinierte Bedingung kann beispielsweise im Zusammenhang mit einem zuvor durchzuführenden Sicherheitscheck der elektrisch bedienbaren Auslöseeinheit vorgesehen sein.

Zudem ist gemäß der Erfindung vorgesehen, dass das Kugelsperrbolzensystem zwei Federelemente und ein zwischen diesen Federelementen positioniertes Kugelaufnahmeelement mit wenigstens einem Kugelelement und mit jeweiligen Federaufnahmebereichen umfasst, welche zusammen in einem Führungszylinderelement des Kugelsperrbolzensystems mit wenigstens einem Kugelöffnungsbereich angeordnet sind, sodass mittels der zwei Federelemente und ohne weitere externe Krafteinflüsse und/oder durch die Auslöseeinheit bedingte Krafteinflüsse das Kugelaufnahmeelement auf eine Startposition für einen entriegelten Zustand der Einsteckvorrichtung bewegbar ist.

Der Vorteil besteht dabei darin, dass die gesonderten zwei Federelemente derart ausgestaltet sind, dass somit stets eine definierte Startposition bewirkbar ist, wenn dies gewünscht ist. Für diesen Zweck sind die miteinander zu verriegelnden Komponenten des Systems einfach nur in einem neutralen Zustand vorzuhalten. Eine unkomplizierte Bereitschaft und einfach zu bedienende Funktionalität ist somit stets gewährleistbar. Das Kugelelement kann beispielsweise kugelförmig, aber auch walzenförmig ausgestaltet sein. Auch ist vorstellbar, dass das Kugelelement selbst eine Kugel oder eben eine Walze darstellt. Das Kugelelement in seinen jeweiligen Ausprägungen kann auch allgemein als Sperrelement bezeichnet werden. In diesem Zusammenhang sind mit anderen Worten also Sperrelemente vorgesehen, welche den bei einem Entnahmeversuch auftretenden Scherkräften widerstehen und so die Entnahme beziehungsweise die Entriegelung verhindern. Das Kugelelement beziehungsweise Sperrelement muss dabei wenigstens in einer Dimension rotationssymmetrisch sein, damit sie auf den Begrenzungsflächen rollen können. Hierfür bietet es sich somit vorteilhaft an, wenn das Kugelelement kugelförmig oder eben auch walzenförmig vorliegt. Die Geometrien der mit den Sperrelementen interagierenden Elemente müssen abhängig von den Geometrien der Sperrelemente gestaltet sein.

Auch ist in einer weiteren Ausgestaltung der Erfindung vorgesehen, dass das Kugelaufnahmeelement und die Federaufnahmebereiche zusammen einstückig vorgesehen sind. Dadurch, dass das Kugelaufnahmeelement und die Federaufnahmebereiche zusammen genommen eine einstückige Einheit bilden, resultiert eine einfache und somit kostengünstige Variante des vorgestellten Verriegelungssystems. Auch wird auf diese Weise eine besondere Stabilität in diesem für den Verriegelungsprozess bedeutsamen Bereich befördert. Auf diese Weise kann besonders effektiv sichergestellt werden, dass diese beiden Komponenten zu einer im Wesentlichen starren Einheit verbunden sind.

Des Weiteren ist in einer weiteren Ausgestaltung der Erfindung vorgesehen, dass das Kugelaufnahmeelement und die jeweiligen Federaufnahmebereiche als austauschbare und modular zusammenbaubare Komponenten der Einsteckvorrichtung vorgesehen sind.

Auf diese Weise ist ein besonders flexibles Verriegelungssystem bereitstellbar, welches beispielsweise an jeweilige Aufgabenbereiche schnell und kostengünstig anpassbar zu gestalten ist. Es ist beispielsweise somit vorstellbar, dass ein jeweiliges Kugelaufnahmeelement je nach Größe der nötigen Kugelelemente, welche dort zu lagern sind, auswählbar ist. Dabei ist stets eine Kompatibilität zu den modularen Federaufnahmebereichen eine einzuhaltende Voraussetzung. Denkbar sind hier jedoch wahlweise auch entsprechende Einsätze für die Federaufnahmebereiche, sodass das Baukastenprinzip an dieser Stelle beliebig erweiterbar ist.

Auch ist in einer weiteren Ausgestaltung der Erfindung vorgesehen, dass das Kugelsperrbolzensystem ein Kappenelement umfasst, welches ausgelegt ist, ein erstes Federelement und einen ersten Federaufnahmebereich von einem Kugelaufnahmeelement aufzunehmen, sodass bei einem Aufnahmevorgang der Einsteckvorrichtung in die Aufnahmevorrichtung aufgrund eines Kontakts zwischen dem Kappenelement und eines Innenwandbereichs der Aufnahmevorrichtung ein definierter Verlagerungsvorgang des Kugelaufnahmeelements zum Zweck der Verriegelung bewirkbar ist.

Dieses Kappenelement ist somit in Steckrichtung der Einsteckvorrichtung im Wesentlichen in vorderster Position vorgesehen. Ein Kontakt mit einem vorderen Bereich dieses Kappenelements bewirkt somit, dass dieses Element aufgrund des vorgesehenen Federelements für eine gewisse Länge einfedert, wobei die Dimensionierung des ersten Federelements im Zusammenspiel mit dem ersten Federaufnahmebereich entsprechend die Grenzen solch eines Bewegungsablaufs vorgibt. Auf diese Weise ist dann komfortabel eine gezielte Verriegelung bewirkbar, wobei die Funktionsweise des vorhandenen Kugelsperrbolzensystems die zuvor genannten Vorteile in diesem Zusammenhang bedingt.

Aufgrund dieser erfinderischen Zusammenlegung von an sich getrennten Aufgabenbereichen, resultiert somit ein kompaktes, preisgünstig herzustellendes Verriegelungssystem, welches darüber hinaus die oben genannte Bedienweise für den Entriegelungsvorgang aufweist.

Ferner ist in einer weiteren Ausgestaltung der Erfindung vorgesehen, dass das Kappenelement in einem Führungszylinderelement des Kugelsperrbolzensystems in einer Durchgangsöffnung des Führungszylinderelements reversibel bewegbar angeordnet ist, sodass das Kappenelement von einer über die äußeren Ausmaße des Führungszylinderelements herausragende Positionierung in eine zumindest teilweise in das Führungszylinderelement eintauchende Positionierung bewegbar ist. Die zuvor genannten Vorteile sind somit noch besser erreichbar.

Zudem ist in einer weiteren Ausgestaltung der Erfindung vorgesehen, dass das Führungszylinderelement im Wesentlichen zwischen Kappenelement und elektrisch bedienbarer Auslöseeinheit angeordnet ist, sodass Verlagerungsvorgänge des beweglich in dem Führungszylinderelement gelagertem Kugelaufnahmeelements entweder aufgrund einer Einwirkung des Kappenelements auf das Kugelaufnahmeelement oder aufgrund einer Einwirkung der elektrisch bedienbaren Auslöseeinheit auf das Kugelaufnahmeelement durchführbar sind.

Auch ist in einer weiteren Ausgestaltung der Erfindung vorgesehen, dass ein Entriegelungsvorgang mittels der elektrisch bedienbaren Auslöseeinheit nur nach einer zuvor detektierten Berechtigungsprüfung mit einem benutzerdefinierten Ergebnis durchführbar ist.

Beispielsweise ist vorstellbar, dass mittels einer Fingerdruckscaneinrichtung ein Profil des Nutzers, sprich der Fingerabdruck, als notwendige Bedingung vorsehbar sein kann, um nach erfolgreichem Scan dann den gewünschten Verriegelungsprozess zu bewirken. Auch die Eingabe eines Codes, eine sprachgesteuerte Funktion oder ein Gesichtsscan sind vorstellbar. Auch eine bestimmte Reihenfolge von Druckimpulsen, beispielsweise: kurz, kurz, lang oder dergleichen kann zuvor benutzerdefiniert einstellbar sein, sodass ein möglichst einfach zu bedienendes Verriegelungssystem resultiert.

Schlussendlich ist in einer weiteren Ausgestaltung der Erfindung vorgesehen, dass die Aufnahmevorrichtung und die elektrisch bedienbare Auslöseeinheit jeweils so ausgelegt sind, dass die elektrisch bedienbare Auslöseeinheit bei einem Einsteckvorgang der Einsteckvorrichtung in die aufnehmende Aufnahmevorrichtung im Wesentlichen mit in der Aufnahmevorrichtung versenkbar ist oder wobei bei einem Einsteckvorgang der Einsteckvorrichtung in die aufnehmende Aufnahmevorrichtung die elektrisch bedienbare Auslöseeinheit in der Aufnahmevorrichtung führbar gelagert ist.

Die elektrisch bedienbare Auslöseeinheit ist somit auf überraschend einfache Weise stets so positionierbar, dass eine zuverlässige Bedienweise des vorgestellten Verriegelungssystems stets gewährleistet ist. Auch ist die elektrisch bedienbare Auslöseeinheit somit auf überraschend einfache Weise vor äußeren Einflüssen, etwa einer unbefugten Betätigung, gut geschützt vorhaltbar, sodass ebenfalls eine zuverlässige Bedienweise des vorgestellten Verriegelungssystems stets gewährleistet ist.

Das vorgestellte Verriegelungssystem ist geeignet für jegliche Komponenten, welche im Wesentlichen separat bestehen und die es gilt in geeigneter Weise miteinander zu verriegeln, miteinander reversibel zu verbinden. Bei dieser Verbindung, welche auch als Verriegelung bezeichnet werden kann, ist dabei auf überraschend einfache Weise ein benutzerfreundlicher Entriegelungsvorgang bereitstellbar, welcher eine kostengünstige und zuverlässige Funktionalität aufweist. Beispielsweise sind auf diese Weise unterschiedlichste Komponenten von einer Informationstechnologiearchitektur reversibel miteinander verriegelbar beziehungsweise verbindbar.

Die Erfindung wird nachfolgend anhand eines Ausführungsbeispiels und dazugehöriger Zeichnungen näher erläutert. Die Figuren zeigen:
- Figur 1: zeigt eine schematische Schnittdarstellung von einem Verriegelungssystem in einem nicht verriegelten Zustand;
- Figur 2: zeigt eine weitere schematische Schnittdarstellung von dem Verriegelungssystem von Figur 1 kurz vor einem verriegelten Zustand;
- Figur 3: zeigt eine weitere schematische Schnittdarstellung von dem Verriegelungssystem von Figur 1 in einem verriegelten Zustand;
- Figur 4: zeigt eine perspektivische Detaildarstellung von einem weiteren Verriegelungssystem;
- Figur 5: zeigt eine weitere perspektivische Detaildarstellung von dem Verriegelungssystem von Figur 4;
- Figur 6: zeigt verschiedene schematische Darstellungen von einem SSD-Einschubsystem mit einem Verriegelungssystem;
- Figur 7: zeigt verschiedene schematische Darstellungen von einem System mit einem Verriegelungssystem.

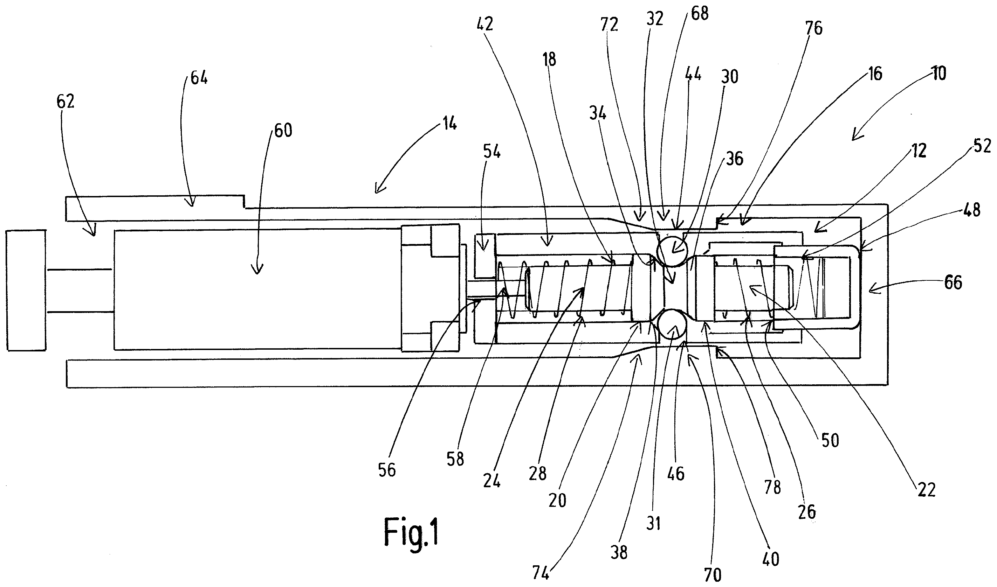

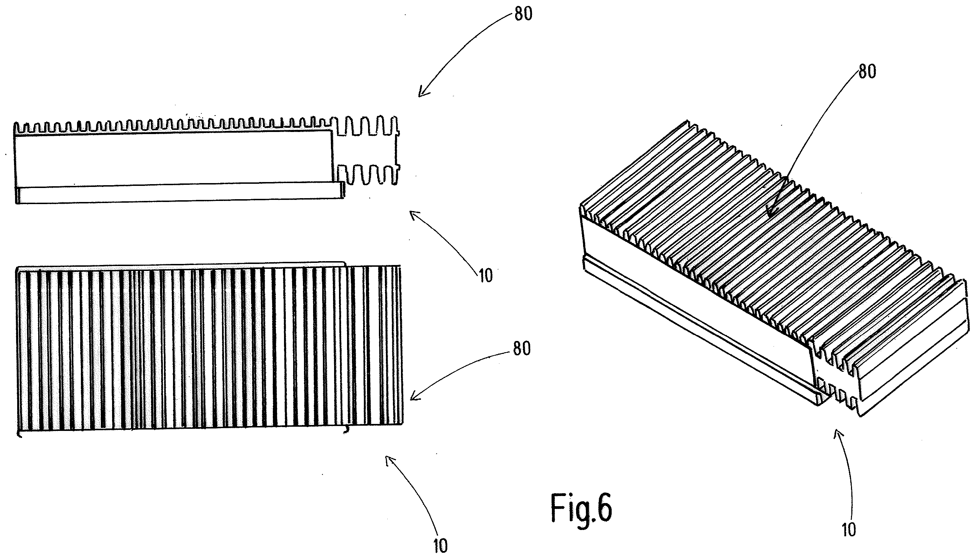

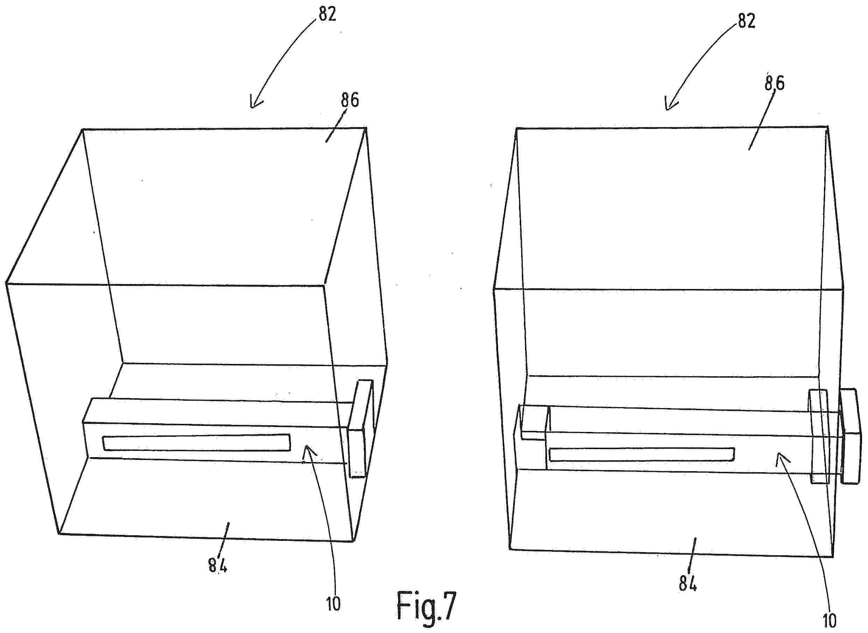

Figur 1 zeigt eine schematische Schnittdarstellung von einem Verriegelungssystem 10 in einem nicht verriegelten Zustand. Dieses Verriegelungssystem 10 ist dabei mit einer Einsteckvorrichtung 12 und eine die Einsteckvorrichtung 12 aufnehmende Aufnahmevorrichtung 14 dargestellt. Die Einsteckvorrichtung 12 ist mit einer ersten Komponente und die Aufnahmevorrichtung 14 mit einer zweiten Komponente wirkverbunden, die miteinander lösbar zu einem System verbindbar sind. In den Figuren 6 und 7 sind konkrete Ausführungen angesprochen. Die Einsteckvorrichtung 12 ist mit einem Kugelsperrbolzensystem 16 dargestellt.

Das Kugelsperrbolzensystem 16 ist dabei mit einem Sperrschieberelement 18 dargestellt, welches ein Kugelaufnahmeelement 20 und jeweilige Federaufnahmebereiche 22, 24 umfasst.

Der erste Federaufnahmebereich 22 ist bezogen auf die Bildebene - rechts dargestellt - und hat in dieser Darstellung ein erstes Federelement 26 aufgenommen. Der zweite Federaufnahmebereich 24 ist bezogen auf die Bildebene - links dargestellt - und hat in dieser Darstellung ein zweites Federelement 28 aufgenommen. Die Federelemente 26 und 28 befinden sich im Gleichgewicht, wodurch die Kugeln in das Kugelaufnahmeelement 20 eintauchen können und sich das System im nichtverriegelten Zustand befindet.

In dem Kugelaufnahmeelement 20 sind zwei Kugelelemente 30, 31 dargestellt. In einer nicht näher dargestellten Ausführungsvariante ist beispielsweise vorstellbar, dass wenigstens zwei solcher im Wesentlichen identischen Kugelelemente 30 vorgesehen sind.

Das Kugelaufnahmeelement 20 weist im Wesentlichen mittig einen Vertiefungsbereich 32 auf, welcher von jeweiligen Rampenbereichen 34, 36 eingefasst ist. Die jeweiligen Rampenbereiche 34, 36 fügen sich dabei einstückig jeweils unmittelbar an den Vertiefungsbereich 32 an.

In der dargestellten Ausführungsvariante ist das Sperrschieberelement 18 einstückig vorgesehen. In einer nicht näher dargestellten Ausführungsvariante ist jedoch vorstellbar, dass dieses Sperrschieberelement 18 mehrteilig aufgebaut ist und gemäß einem Baukastenprinzip modular vorgesehen ist.

Das Sperrschieberelement 18 ist mit seinen jeweiligen Komponenten entlang seiner Längsachse als drehsymmetrischer Körper vorgesehen. Dies ist bei der nicht näher dargestellten modularen Bauweise ebenfalls so gedacht. Mit anderen Worten ist somit das Kugelaufnahmeelement 20 im Wesentlichen als zylindrischer Körper mit seinen entsprechenden hinsichtlich jeweiliger Durchmesser variierenden Bereichen vorgesehen.

Die jeweiligen Federaufnahmebereiche 22, 24 weisen dabei den gleichen Durchmesser wie der Vertiefungsbereich 32 auf. In einer nicht näher gezeigten Ausführungsform ist dies jedoch nicht zwingend nötig. Die Federaufnahmebereiche müssen nur genügend Raum für die Federelemente lassen. Der Vertiefungsbereich ist abhängig von einem jeweiligen Kugelelementdurchmesser, wobei der Vertiefungsbereich ein vollständiges Eintauchen der Kugelelemente in den Führungszylinder ermöglichen muss.

In einer nicht näher dargestellten Ausführungsvariante ist jedoch vorstellbar, dass diese Durchmesser jeweils individuell und sich unterscheidend vorgesehen sind. Es ist zudem vorstellbar, dass in einer nicht näher dargestellten Ausführungsvariante die Federaufnahmebereiche 22, 24 und der Vertiefungsbereich 32 zusammen als ein solider im Wesentlichen zylindrischer Körper vorgesehen sind, welcher mittels aufgesteckter Elemente (Rampenbereiche/ Endbereiche) dann zu dem finalen Sperrschieberelement 18 modular ergänzt wird. Die Elemente sind mit dem zylindrischen Körper dann unverschieblich verbunden. Durch Krafteinwirkung erfolgende Bewegungen des Zylinders führen zu den gleichen Bewegungen der Rampen- und Endbereiche.

Der erste Rampenbereich 34 ist bezogen auf die Bildebene links des Vertiefungsbereichs 32 und der zweite Rampenbereich 36 ist bezogen auf die Bildebene rechts des Vertiefungsbereichs 32 dargestellt. An die Rampenbereiche 34, 36 schließen sich jeweils von außen jeweilige Endelemente 38, 40 an. Das erste und zweite Endelemente 38, 40 weist dabei jeweils einen gleichen Durchmesser auf, welcher so dimensioniert ist, dass das Sperrschieberelement 18 im Wesentlichen passend und im Wesentlichen reibungsarm in einem Führungszylinderelement 42 des Kugelsperrbolzensystems 16 führbar gelagert ist.

Das Führungszylinderelement 42 weist dabei jeweilige Kugelöffnungsbereiche 44, 46 auf. Der erste Kugelöffnungsbereich 44 ist bezogen auf die Bildebene oben dargestellt. Der zweite Kugelöffnungsbereich 46 ist bezogen auf die Bildebene unten dargestellt. In einer nicht näher dargestellten Ausführungsvariante ist jedoch vorstellbar, dass wenigstens zwei solcher Öffnungsbereiche vorgesehen sind, wobei sich die Anzahl nach der Anzahl der vorgesehenen Kugelelemente richtet.

Die dargestellten Kugelöffnungsbereiche 44, 46 sind ausgelegt die Kugelelemente 30, 31 zumindest teilweise nach oben und unten beziehungsweise außerhalb des Führungszylinderelements 42 austreten zu lassen.

Bezogen auf die Bildebene ist rechts ein Kappenelement 48 als Bestandteil der Einsteckvorrichtung 12 dargestellt. Das Kappenelement 48 ist ausgelegt den ersten Federaufnahmebereich 22 und das erste Federelement 26 aufzunehmen. Hierfür weist es einen Rundöffnungsbereich 50 auf, welcher in dieser Darstellung einen Durchmesser aufweist, welcher im Wesentlichen dem des ersten Federelements 26 entspricht, sodass dieses nicht nur zumindest teilweise in diesem aufgenommen ist, sondern auch durch dieses führbar gelagert ist.

Das Kappenelement 48 ist zumindest teilweise in einer Durchgangsöffnung 52 des Führungszylinderelements 42 führbar gelagert aufgenommen dargestellt. Mit anderen Worten ist diese Durchgangsöffnung 52 ausgelegt, dass Kappenelement 48 derart aufzunehmen, dass dieses bezogen auf die Bildebene nach links und rechts durch diese Durchgangsöffnung 52 bewegbar ist.

Das zweite Federelement 28 ist bezogen auf die Bildebene links von einem Stoppelement 54 gehalten dargestellt. Mit anderen Worten ist dieses zweite Federelement 28 in seiner Ruheposition zwischen dem Stoppelement 54 und dem Kugelaufnahmeelement 20 gehalten dargestellt. Das Stoppelement 54 ist dabei im Wesentlichen nahtlos an das Führungszylinderelement 42 angeordnet dargestellt und weist im Wesentlichen mittig eine Führungsdurchgangsöffnung 56 auf. Durch diese Führungsdurchgangsöffnung 56 ragt ein Stößelelement 58 einer elektrisch bedienbaren Auslöseeinheit 60.

In diesem nicht verriegelten Zustand, welcher auch als Ausgangsposition bezeichnet werden kann, ist das Sperrschieberelement 18 in einer Position, in der sich die Kugelelemente 30, 31 in dem Bereich des Sperrschieberelement 18 mit dem kleinsten Außendurchmesser befinden, wodurch sie voll in das Führungszylinderelement 42 eintauchen können. Mit anderen Worten sind die Kugelelemente 30, 31 in dem Vertiefungsbereich 32 gelagert dargestellt. Dazu müssen sich die beiden Federelemente 26, 28 in genau dieser Position des Sperrschieberelements 18 entweder im Kräftegleichgewicht befinden oder das Sperrschieberelement 18 muss durch das zweite Federelement 28 gegen einen geeignet positionierten Anschlag gedrückt werden. Die fixierenden Bestandteile der Aufnahmevorrichtung 14 sind in dieser Darstellung noch nicht in einer für den Verriegelungsvorgang zu erreichenden Positionierung. Auf das Kappenelement 48 wirken noch keine weiteren Kräfte.

Die dargestellte Aufnahmevorrichtung 14 ist ausgelegt, die Einsteckvorrichtung 12 und die elektrisch bedienbare Auslöseeinheit 60 in einem Innenbereich 62 aufzunehmen. Mit anderen Worten weist die Aufnahmevorrichtung 14 einen im Wesentlichen zylindrischen Hohlkörper 64 auf, welcher ausgelegt ist, die Einsteckvorrichtung 12 und die elektrisch bedienbare Auslöseeinheit 60 in seinen Innenbereich 62 aufzunehmen. Begrenzt wird dieser zylindrische Hohlkörper 64 bezogen auf die Bildebene rechts von einem Abschlusselement 66, an welchem in dieser Darstellung das Kappenelement 48 anliegt.

Der zylindrische Hohlkörper 64 weist an seinen Innenwandungen zwei Führungsschienenelemente 68, 70 auf. Diese Führungsschienenelemente 68, 70 weisen jeweilige Leitbereiche 72, 74 auf. Die Führungsschienenelemente 68, 70 sind bezogen auf die Bildebene also links von diesen Leitbereichen 72, 74 begrenzt, welche an einem Durchmesser des zylindrischen Hohlkörpers 64 starten und bis zu einer maximalen Ausdehnung der jeweiligen Führungsschienenelemente 68, 70 in den Innenbereich 62 hinein gehen. Rechts hingegen sind diese jeweiligen Führungsschienenelemente 68, 70 jeweils von Stufenelementen 76, 78 begrenzt.

Die maximalen Ausdehnungen der jeweiligen Führungsschienenelemente 68, 70 in den Innenbereich 62 hinein bewirken zusammen, dass durch diese Führungsschienenelemente 68, 70, welche beispielsweise zumindest teilweise auch umlaufend in dem Innenbereich 62 als ein zumindest teilweise vorgesehener einstückiger Bereich vorgesehen sein können, das Führungszylinderelement 42 auf eine definierte Weise weiter in die Aufnahmevorrichtung 14 hinein bewegbar ist. Insofern bewirken diese Führungsschienenelemente 68, 70, dass das Führungszylinderelement 42 erst mithilfe der jeweiligen Leitbereiche 72, 74 aufgegleist wird und dann durch die maximalen Ausdehnungen in einer definierten Lage weiter im Inneren der Aufnahmevorrichtung 14 bewegbar ist. Dabei werden die Kugelelemente 30, 31 daran gehindert, sich durch die Kugelöffnungsbereiche 44, 46 nach außen zu bewegen, da sie von den Führungsschienenelementen 68, 70 beziehungsweise von jeweiligen maximal in den Innenbereich hineinragenden Bereichen dieser daran gehindert werden.

Mit anderen Worten werden beim Aufstecken der Aufnahmevorrichtung 14 von rechts (bezogen auf die Bildebene) auf die Einsteckvorrichtung 12 zunächst die Kugelelemente 30, 31 von außen durch den Bereich mit dem kleinen Innendurchmesser der Aufnahmevorrichtung 14 blockiert.

Die vorgestellte Anordnung (Innenbereich der Aufnahmevorrichtung 14, Außenbereich der Einsteckvorrichtung 12) ist vorzugsweise rotationssymmetrisch. Es handelt sich somit vorzugsweise etwa bei den Leitbereichen 72, 74, bei den Führungsschienenelementen 68, 70, den Stufenelementen 76, 78 sowie den Rampenbereichen 34, 36 und dem Vertiefungsbereich 32 um entsprechend umlaufende Bereiche.

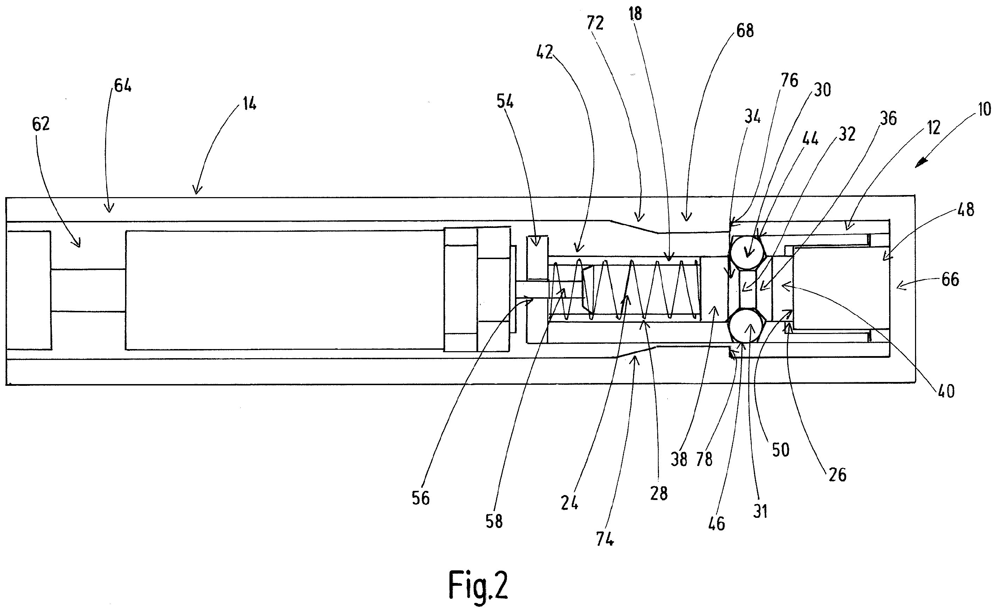

Figur 2 zeigt eine weitere schematische Schnittdarstellung von dem Verriegelungssystem 10 von Figur 1 kurz vor einem verriegelten Zustand. Es gelten die in Figur 1 eingeführten Bezugszeichen, sodass diese an dieser Stelle nicht erneut eingeführt werden.

Bei einer weiteren Bewegung der Aufnahmevorrichtung 14 nach links wird auch das Kappenelement 48 nach links bewegt. Dabei kann sich das Sperrschieberelement 18 relativ zum Führungszylinderelement 42 zunächst nicht bewegen, bis die Kugelelemente 30, 31 in den Bereich der Aufnahmevorrichtung 14 mit dem größten Innendurchmesser gelangen.

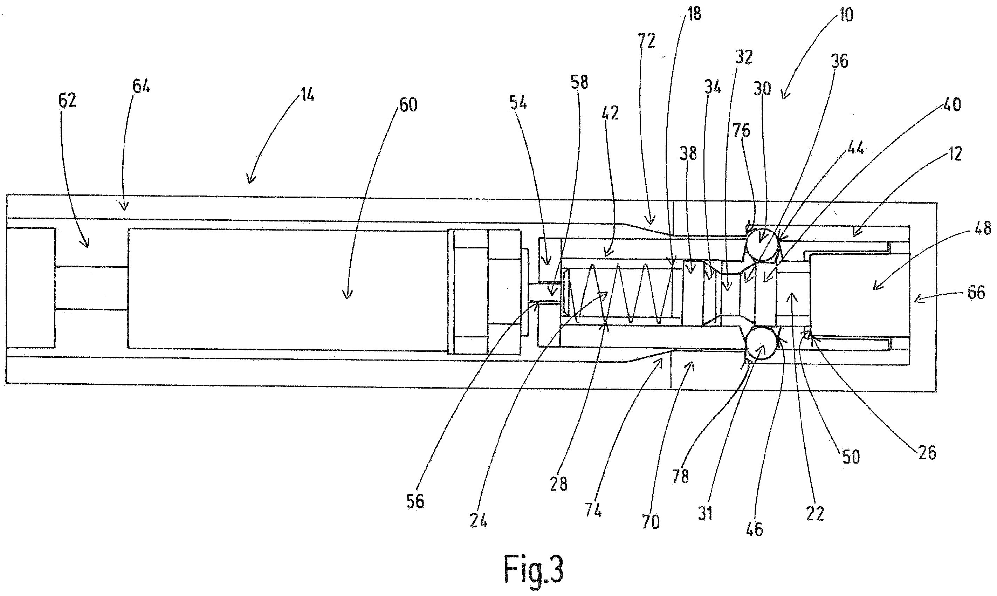

Figur 3 zeigt eine weitere schematische Schnittdarstellung von dem Verriegelungssystem 10 von Figur 1 in einem verriegelten Zustand. Es gelten die in Figur 1 eingeführten Bezugszeichen, sodass diese an dieser Stelle nicht erneut eingeführt werden.

Jetzt kann sich das Sperrschieberelement 18 aufgrund der Kraft des stark komprimierten ersten Federelements 26, welches auch als Verriegelungsfederelement bezeichnet werden kann, durch Überwindung der in die Gegenrichtung wirkenden kleineren Kraft des zweiten Federelements 28, welches auch als Entriegelungsfederelement bezeichnet werden kann, nach links bewegen. Dabei werden die Kugelelemente 30, 31 nach außen gedrückt, sodass sie aus dem Führungszylinderelement 42 herausragen und in diese Position durch das Sperrschieberelement 18 in der in Figur 3 dargestellten Position mittels der Stufenelemente 76, 78 blockiert werden, wodurch zugleich die Aufnahmevorrichtung 14 dauerhaft blockiert ist.

In den gezeigten Ausführungsvarianten umfasst diese elektrisch bedienbare Auslöseeinheit 60 eine Hubmagnetvorrichtung. Das Stößelelement 58 ist dabei Bestandteil der elektrisch bedienbaren Auslöseeinheit 60. Zum Entriegeln wird also die Hubmagnetvorrichtung betätigt, wodurch das Stößelelement 58 der elektrisch bedienbaren Auslöseeinheit 60 beziehungsweise der Hubmagnetvorrichtung mit einer geeignet dimensionierten Kraft nach rechts auf das Sperrschieberelement 18 wirkt. Solange die Summe der nach rechts wirkenden Druckkraft der Hubmagnetvorrichtung und die gleichgerichtete Kraft des zweiten Federelements 28 die aktuelle nach links gerichtete Kraft des ersten Federelements 26 übersteigt, bewegt sich das Sperrschieberelement 18 nach rechts, wobei in der Endposition des Sperrschieberelements 18 die Kugelelemente 30, 31 wieder in das Führungszylinderelement 42 eintauchen können und die Fixierung der Aufnahmevorrichtung 14 aufgehoben wird. In der Folge schiebt das gespannte erste Federelement 26 über das Kappenelement 48 die Aufnahmevorrichtung 14 nach rechts, womit der Entriegelungsvorgang abgeschlossen ist und die Aufnahmevorrichtung 14 nach rechts von der Einsteckvorrichtung 12 abgezogen werden kann.

Die Funktionsfähigkeit der beschriebenen Anordnung setzt geeignete Dimensionierungen voraus. Dies betrifft etwa den Weg, den die Aufnahmevorrichtung 14 von der ersten Berührung des Kappenelements 48 bis zur abgeschlossenen Fixierung zurücklegt. Auch betrifft dies etwa den Weg, den das Sperrschieberelement 18 zwischen der Entriegelungs- und der Verriegelungsposition zurücklegen muss. Auch betrifft dies etwa die Längen, die Federkonstanten sowie gegebenenfalls die Vorspannungen der beiden Federelemente 26, 28. Auch betrifft dies etwa die Druckkraft, den Hub und die Haltedauer des Hubmagneten der Hubmagnetvorrichtung.

Die Einstellungen und die dabei möglichen Effekte sind für einen Fachmann gemäß den bisher offenbarten Inhalten ohne Weiteres mittels geeigneter Versuche und der offenbarten technischen Anleitung herbeiführbar, sodass an dieser Stelle auf detaillierte Ausführungsvarianten verzichtet wird. Die Federelemente 26, 28 können beispielsweise gleich dimensioniert sein und jeweils eine Ausgangslänge von 14 mm aufweisen, wobei die jeweilige Federrate R jeweils 0,926 N/ mm beträgt.

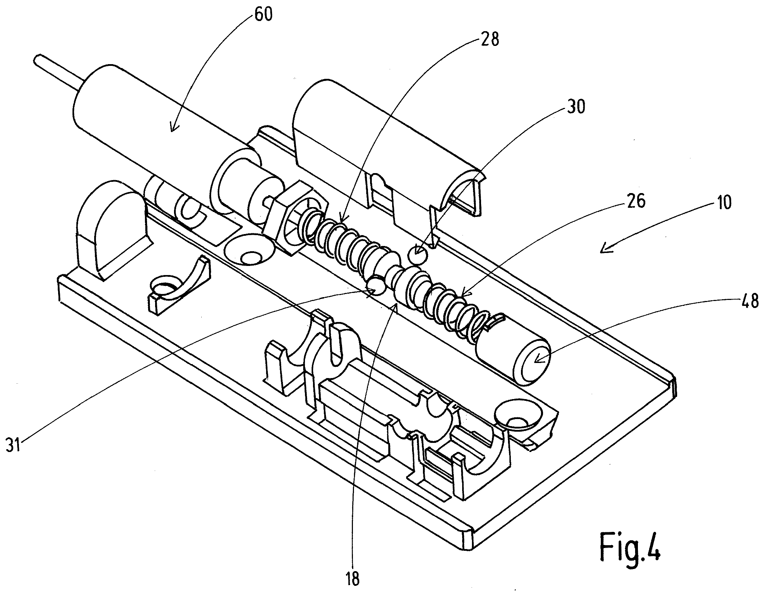

Figur 4 zeigt eine perspektivische Detaildarstellung von einem weiteren Verriegelungssystem 10. Es handelt sich dabei um eine perspektivische Detaildarstellung des in den Figuren 1 bis 3 dargestellten Verriegelungssystems 10. Es gelten die in Figur 1 eingeführten Bezugszeichen, sodass diese an dieser Stelle nicht erneut eingeführt werden.

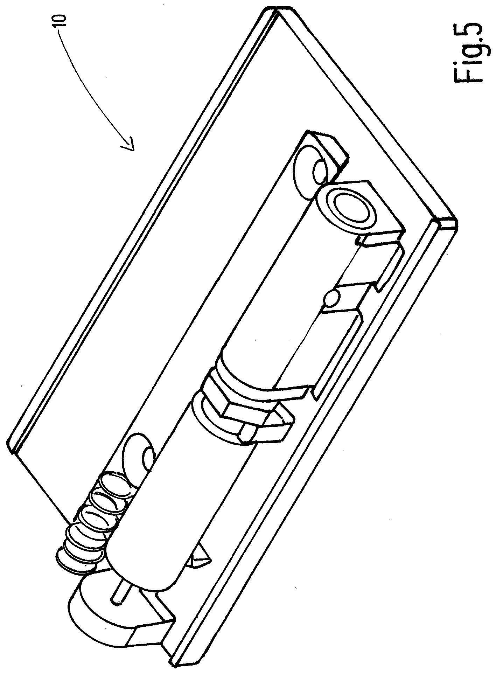

Figur 5 zeigt eine weitere perspektivische Detaildarstellung von dem Verriegelungssystem 10 von Figur 4. Es gelten die in Figur 1 eingeführten Bezugszeichen, sodass diese an dieser Stelle nicht erneut eingeführt werden.

Figur 6 zeigt verschiedene schematische Darstellungen von einem SSD (Solid-State-Drive)-Einschubsystem 80 mit einem Verriegelungssystem 10. Eine Festplattenkomponente 81 ist mit der Aufnahmeeinrichtung 14 ausgestattet. Ein übergeordnetes Gehäuse 83 ist als zweite Komponente mit der Einsteckvorrichtung 12 ausgestattet.

Figur 7 zeigt verschiedene schematische Darstellungen von einem allgemeinen System 82 mit einem Verriegelungssystem 10. Es ist somit vorstellbar, dass das vorgestellte Verriegelungssystem 10 in einem übergeordneten System 82 integriert vorgesehen ist, wobei bezogen auf die Bildebene links ein verriegelter und rechts ein entriegelter Zustand dargestellt ist. Je nach Anwendungsfall sind unterschiedliche Grade von einer Integration vorstellbar und die Möglichkeiten sind an dieser Stelle nicht nennenswert begrenzt. Eine erste Komponente 84 ist mit einer zweiten Komponente 86 des Verriegelungssystems 10 lösbar über das Verriegelungssystem 10 verbindbar. Bei den Komponenten 84 und 86 kann es sich um beliebig miteinander zu verbindende Teile, Baugruppen oder dergleichen handeln.

### Bezugszeichen

- 10: Verriegelungssystem
- 12: Einsteckvorrichtung
- 14: Aufnahmevorrichtung
- 16: Kugelsperrbolzensystem

- 18: Sperrschieberelement
- 20: Kugelaufnahmeelement
- 22: erster Federaufnahmebereich
- 24: zweiter Federaufnahmebereich

- 26: erstes Federelement
- 28: zweites Federelement
- 30: erstes Kugelelement
- 31: zweites Kugelelement

- 32: Vertiefungsbereich
- 34: erster Rampenbereich
- 36: zweiter Rampenbereich
- 38: erstes Endelement

- 40: zweites Endelement
- 42: Führungszylinderelement
- 44: erster Kugelöffnungsbereich
- 46: zweiter Kugelöffnungsbereich

- 48: Kappenelement
- 50: Rundöffnungsbereich
- 52: Durchgangsöffnung
- 54: Stoppelement

- 56: Führungsdurchgangsöffnung
- 58: Stößelelement
- 60: Auslöseeinheit
- 62: Innenbereich
- 64: Hohlkörper
- 66: Abschlusselement
- 68: erstes Führungsschienenelement
- 70: zweites Führungsschienenelement
- 72: erster Leitbereich
- 74: zweiter Leitbereich

- 76: erstes Stufenelement
- 78: zweites Stufenelement
- 80: SSD-Einschubsystem
- 82: System
- 84: erste Komponente
- 86: zweite Komponente

## Patentansprüche

1. Verriegelungssystem (10) zum lösbaren Verbinden von zwei Komponenten eines Systems, umfassend
eine Einsteckvorrichtung (12) mit einem Kugelsperrbolzensystem (16) und eine die Einsteckvorrichtung (12) aufnehmende Aufnahmevorrichtung (14), wobei die Aufnahmevorrichtung (14) ausgelegt ist, die Einsteckvorrichtung (12) derart aufzunehmen, dass die Einsteckvorrichtung (12) beim Einführen in die Aufnahmevorrichtung (14) mittels des Kugelsperrbolzensystems in einen verriegelten Zustand in der Aufnahmevorrichtung (14) bewegbar ist,
die Einsteckvorrichtung (12) mit einer ersten Komponente und die Aufnahmevorrichtung (14) mit einer zweiten Komponente des Systems wirkverbunden sind, mittels einer elektrisch bedienbaren Auslöseeinheit (60) des Verriegelungssystems (10) der verriegelte Zustand der Einsteckvorrichtung (12) in der Aufnahmevorrichtung (14) aufhebbar ist, sodass die Einsteckvorrichtung (12) aus der Aufnahmevorrichtung (14) entfernbar ist,
**dadurch gekennzeichnet, dass**
das Kugelsperrbolzensystem (16) zwei Federelemente (26, 28) und ein zwischen diesen Federelementen (26, 28) positioniertes Kugelaufnahmeelement (20) mit wenigstens einem Kugelelement (30, 31) und mit jeweiligen Federaufnahmebereichen (22, 24) umfasst, welche zusammen in einem Führungszylinderelement (42) des Kugelsperrbolzensystems (16) mit wenigstens einem Kugelöffnungsbereich (44, 46) angeordnet sind, sodass mittels der zwei Federelemente (26, 28) und ohne weitere externe Krafteinflüsse und/oder durch die Auslöseeinheit (60) bedingte Krafteinflüsse das Kugelaufnahmeelement (20) auf eine Startposition für einen entriegelten Zustand der Einsteckvorrichtung (12) bewegbar ist.

2. Verriegelungssystem (10) nach Anspruch 1, wobei die elektrisch bedienbare Auslöseeinheit (60) wenigstens eine elektromagnetische Vorrichtung, insbesondere eine Hubmagnetvorrichtung, umfasst.

3. Verriegelungssystem (10) nach einem der vorherigen Ansprüche, wobei die elektrisch bedienbare Auslöseeinheit (60) ausgelegt ist, nach Erhalt eines Auslösesignals, insbesondere eines Auslösesignals von einer systemeigenen oder systemexternen Entriegelungsvorrichtung, die Verriegelung nach einem benutzerdefiniert einstellbarem Zeitintervall und/oder nach einem Erreichen von einer benutzerdefinierten Bedingung, aufzuheben.

4. Verriegelungssystem (10) nach einem der vorherigen Ansprüche, wobei die elektrisch bedienbare Auslöseeinheit (60) ausgelegt ist, nach Erhalt eines Auslösesignals und in Abhängigkeit eines von einer systemeigenen oder systemexternen Entriegelungsvorrichtung detektierten Status einer benutzerdefiniert einstellbaren Bedingung die Verriegelung aufzuheben.

5. Verriegelungssystem (10) nach Anspruch 1, wobei das Kugelaufnahmeelement (20) und die Federaufnahmebereiche (22, 24) zusammen einstückig vorgesehen sind.

6. Verriegelungssystem (10) nach Anspruch 1, wobei das Kugelaufnahmeelement (20) und die jeweiligen Federaufnahmebereiche (22, 24) als austauschbare und modular zusammenbaubare Komponenten der Einsteckvorrichtung (12) vorgesehen sind.

7. Verriegelungssystem (10) nach einem der vorherigen Ansprüche, wobei das Kugelsperrbolzensystem (16) ein Kappenelement (48) umfasst, welches ausgelegt ist, ein erstes Federelement (26) und einen ersten Federaufnahmebereich (22) von einem Kugelaufnahmeelement (20) aufzunehmen, sodass bei einem Aufnahmevorgang der Einsteckvorrichtung (12) in die Aufnahmevorrichtung (14) aufgrund eines Kontakts zwischen dem Kappenelement (48) und eines Innenwandbereichs der Aufnahmevorrichtung (14) ein definierter Verlagerungsvorgang des Kugelaufnahmeelements (20) zum Zweck der Verriegelung bewirkbar ist.

8. Verriegelungssystem (10) nach Anspruch 7, wobei das Kappenelement (48) in einem Führungszylinderelement (42) des Kugelsperrbolzensystems (16) in einer Durchgangsöffnung (52) des Führungszylinderelements (42) reversibel bewegbar angeordnet ist, sodass das Kappenelement (48) von einer über die äußeren Ausmaße des Führungszylinderelements (42) herausragende Positionierung in eine zumindest teilweise in das Führungszylinderelement (42) eintauchende Positionierung bewegbar ist.

9. Verriegelungssystem (10) nach Anspruch 8, wobei das Führungszylinderelement (42) im Wesentlichen zwischen Kappenelement (48) und elektrisch bedienbarer Auslöseeinheit (60) angeordnet ist, sodass Verlagerungsvorgänge des beweglich in dem Führungszylinderelement (42) gelagerten Kugelaufnahmeelements (20) entweder aufgrund einer Einwirkung des Kappenelements (48) auf das Kugelaufnahmeelement (20) oder aufgrund einer Einwirkung der elektrisch bedienbaren Auslöseeinheit (60) auf das Kugelaufnahmeelement (20) durchführbar sind.

10. Verriegelungssystem (10) nach einem der vorherigen Ansprüche, wobei ein Entriegelungsvorgang mittels der elektrisch bedienbaren Auslöseeinheit (60) nur nach einer zuvor detektierten Berechtigungsprüfung mit einem benutzerdefinierten Ergebnis durchführbar ist.

11. Verriegelungssystem (10) nach einem der vorherigen Ansprüche, wobei die Aufnahmevorrichtung (14) und die elektrisch bedienbare Auslöseeinheit (60) jeweils so ausgelegt sind, dass die elektrisch bedienbare Auslöseeinheit (60) bei einem Einsteckvorgang der Einsteckvorrichtung (12) in die aufnehmende Aufnahmevorrichtung (14) im Wesentlichen mit in der Aufnahmevorrichtung (14) versenkbar ist oder wobei bei einem Einsteckvorgang der Einsteckvorrichtung (12) in die aufnehmende Aufnahmevorrichtung (14) die elektrisch bedienbare Auslöseeinheit (60) in der Aufnahmevorrichtung (14) führbar gelagert ist.

12. System (82) umfassend ein Verriegelungssystem (10) nach einem der vorherigen Ansprüche 1 bis 11.

## Claims

1. A locking system (10) for releasably connecting two components of a system, comprising
an insertion device (12) with a ball lock bolt system (16) and a receiving device (14) that accommodates the insertion device (12), wherein the receiving device (14) is designed to receive the insertion device (12) in such a way that, when inserted into the receiving device (14), the insertion device (12) can be moved into a locked state in the receiving device (14) by means of the ball lock bolt system,
the insertion device (12) is operatively connected to a first component and the receiving device (14) is operatively connected to a second component of the system, the locked state of the insertion device (12) in the receiving device (14) can be released by means of an electrically operable release unit (60) of the locking system (10), so that the insertion device (12) can be removed from the receiving device (14), **characterized in that**
the ball lock bolt system (16) comprises two spring elements (26, 28) and a ball receiving element (20) positioned between these spring elements (26, 28) with at least one ball element (30, 31) and with respective spring receiving areas (22, 24) which are arranged together in a guide cylinder element (42) of the ball lock bolt system (16) with at least one ball opening area (44, 46) so that, by means of the two spring elements (26, 28) and without further external forces and/or forces caused by the release unit (60), the ball receiving element (20) can be moved to a starting position for an unlocked state of the insertion device (12).

2. Locking system (10) according to claim 1, wherein the electrically operable release unit (60) comprises at least one electromagnetic device, in particular a lifting magnet device.

3. Locking system (10) according to one of the preceding claims, wherein the electrically operable release unit (60) is configured, after receiving a release signal, in particular a release signal from a system-internal or system-external unlocking device, to release the lock after a user- definable adjustable time interval and/or after a user-defined condition has been reached.

4. Locking system (10) according to one of the previous claims, wherein the electrically operable release unit (60) is configured to release the lock after receiving a release signal and depending on a status of a user-definable condition detected by a system-internal or system-external unlocking device.

5. Locking system (10) according to claim 1, wherein the ball receiving element (20) and the spring receiving areas (22, 24) are provided commonly integrated.

6. Locking system (10) according to claim 1, wherein the ball receiving element (20) and the respective spring receiving areas (22, 24) are provided as interchangeable and modularly assemblable components of the insertion device (12).

7. Locking system (10) according to one of the preceding claims, wherein the ball lock bolt system (16) comprises a cap element (48) which is designed to receive a first spring element (26) and a first spring receiving area (22) from a ball receiving element (20) so that, during an insertion process of the insertion device (12) into the receiving device (14), a defined displacement process of the ball receiving element (20) for the purpose of locking can be effected due to contact between the cap element (48) and an inner wall region of the receiving device (14).

8. Locking system (10) according to claim 7, wherein the cap element (48) is arranged in a guide cylinder element (42) of the ball lock bolt system (16) in a through opening (52) of the guide cylinder element (42) so that the cap element (48) can be moved from a position protruding beyond the outer dimensions of the guide cylinder element (42) to a position at least partially immersed in the guide cylinder element (42).

9. Locking system (10) according to claim 8, wherein the guide cylinder element (42) is arranged substantially between the cap element (48) and the electrically operable release unit (60) so that displacement movements of the ball receiving element (20) movably mounted in the guide cylinder element (42) can be performed due to an action of the cap element (48) on the ball receiving element (20) or due to an action of the electrically operable release unit (60) on the ball receiving element (20).

10. Locking system (10) according to one of the previous claims, wherein an unlocking operation by means of the electrically operable release unit (60) can only be performed after a previously detected authorization check with a user-defined result.

11. Locking system (10) according to one of the previous claims, wherein the receiving device (14) and the electrically operated release unit (60) are each designed such that the electrically operated release unit (60) can essentially be retracted into the receiving device (14) during insertion of the insertion device (12) into the receiving device (14), or wherein, during insertion of the insertion device (12) into the receiving device (14), the electrically operable release unit (60) is guidedly mounted in the receiving device (14).

12. System (82) comprising a locking system (10) according to one of the preceding claims 1 to 11.

## Revendications

1. Système (10) de verrouillage pour assembler de manière amovible deux composants d'un système, comprenant
un dispositif (12) d'enfichage ayant un système (16) à axe de blocage à bille et un dispositif (14) de réception recevant le dispositif (12) d'enfichage, dans lequel le dispositif (14) de réception est conçu pour recevoir le dispositif (12) d'enfichage, de manière à ce que le dispositif (12) d'enfichage puisse, lors de l'introduction dans le dispositif (14) de réception, être, au moyen du système à axe de blocage à bille, mis dans une position verrouillée dans le dispositif (14) de réception,
le dispositif (12) d'enfichage avec un premier composant et le dispositif (14) de réception avec un deuxième composant du système sont en liaison d'action, au moyen d'une unité (60) de déclenchement, pouvant être manœuvrée électriquement, du système (10) de verrouillage, l'état verrouillé du dispositif (12) d'enfichage dans le dispositif (14) de réception peut être levé, de sorte que le dispositif (12) d'enfichage peut être retiré du dispositif (14) de réception,
**caractérisé en ce que**
le système (16) à axe de blocage à bille comprend deux éléments (26, 28) de ressort et un élément (20) de réception de bille en position entre ces éléments (26, 28) de ressort et ayant au moins un élément (30, 31) à bille et ayant respectivement des parties (22, 24) de réception de ressort, qui, ensemble, dans un élément (42) à cylindre de guidage du système (16) à axe de blocage à bille ayant au moins une partie (44, 46) d'ouverture pour une bille, sont disposées, de manière à ce que, au moyen des deux éléments (26, 28) de ressort et sans influence supplémentaire de force extérieure et/ou par des influences de force impliquées par l'unité (60) de déclenchement, l'élément (20) de réception de bille puisse être mis en une position de début pour un état déverrouillé du dispositif (12) d'enfichage.

2. Système (10) de verrouillage suivant la revendication 1, dans lequel l'unité (60) de déclenchement, pouvant être manœuvrée électriquement, comprend au moins un dispositif électromagnétique, en particulier un dispositif à électroaimant de levage.

3. Système (10) de verrouillage suivant l'une des revendications précédentes, dans lequel l'unité (60) de déclenchement pouvant être manœuvrée électriquement, est conçue pour, après la réception d'un signal de déclenchement, en particulier d'un signal de déclenchement, d'un dispositif de déverrouillage propre au système ou extérieur au système, lever le verrouillage après un intervalle de temps réglable défini par l'utilisateur et/ou après que soit satisfaite une condition définie par l'utilisateur.

4. Système (10) de verrouillage suivant l'une des revendications précédentes, dans lequel l'unité (60) de déclenchement pouvant être manœuvrée électriquement est conçue pour, après la réception d'un signal de déclenchement et en fonction d'un statut, détecté par un dispositif de déverrouillage propre au système ou extérieur au système, d'une condition réglable définie par l'utilisateur, faire cesser le verrouillage.

5. Système (10) de verrouillage suivant la revendication 1, dans lequel l'élément (20) de réception de bille et des parties (22, 24) de réception de ressort sont prévus ensemble en une seule pièce.

6. Système (10) de verrouillage suivant la revendication 1, dans lequel l'élément (20) de réception de bille et les parties (22, 24) de réception de ressort respectives sont prévus sous la forme de composants remplaçables et/ou pouvant être assemblés de manière modulaire du dispositif (12) d'enfichage.

7. Système (10) de verrouillage suivant l'une des revendications précédentes, dans lequel le système (16) à axe de blocage à bille comprend un élément (48) de coiffe, qui est conçu pour recevoir un premier élément (26) de ressort et une première partie (22) de réception de ressort par un élément (20) de réception de bille, de manière à ce que, lors de l'opération de réception du dispositif (12) d'enfichage dans le dispositif (14) de réception, en raison d'un contact entre l'élément (48) de coiffe et une partie de paroi intérieure du dispositif (14) de réception, une opération définie de déplacement de l'élément (20) de réception à bille, puisse être provoquée à des fins de verrouillage.

8. Système (10) de verrouillage suivant la revendication 7, dans lequel l'élément (48) de coiffe peut être déplacé, de manière réversible, dans un élément (42) à cylindre de guidage du système (16) à axe de blocage à bille dans une ouverture (52) de passage de l'élément (42) à cylindre de guidage, de manière à pouvoir mettre l'élément (48) de coiffe d'un positionnement en saillie des dimensions extérieurs de l'élément (42) à cylindre de guidage dans un positionnement pénétrant au moins en partie dans l'élément (42) à cylindre de guidage.

9. Système (10) de verrouillage suivant la revendication 8, dans lequel l'élément (42) à cylindre de guidage est disposé sensiblement entre l'élément (48) de coiffe et l'unité (60) de déclenchement pouvant être manœuvrée électriquement, de manière à pouvoir effectuer, en raison d'un effet de l'élément (48) de coiffe sur l'élément (20) de réception à bille ou en raison d'un effet de l'unité (60) de déclenchement pouvant être manœuvrée électriquement sur l'élément (20) de réception à bille, des opérations de déclenchement de l'élément (20) de réception de bille monté mobile dans l'élément (42) à cylindre de guidage.

10. Système (10) de verrouillage suivant l'une des revendications précédentes, dans lequel l'opération de déverrouillage ne peut, au moyen de l'unité (60) de déclenchement pouvant être manœuvrée électriquement, être effectuée qu'après un contrôle d'autorisation détecté auparavant par un résultat défini par l'utilisateur.

11. Système (10) de verrouillage suivant l'une des revendications précédentes, dans lequel le dispositif (14) de réception, et l'unité (60) de déclenchement pouvant être manœuvrée électriquement sont conçus chacun, de manière à ce que l'unité (60) de déclenchement pouvant être manœuvrée électriquement puisse, lors de l'enfichage du dispositif (12) d'enfichage dans le dispositif (14) de réception en réception, être abaissée essentiellement avec le dispositif (14) de réception ou dans lequel, lors d'une opération d'enfichage du dispositif (12) d'enfichage dans le dispositif (14) de réception en réception, l'unité (60) de déclenchement pouvant être manœuvrée électriquement est montée avec possibilité d'être guidée dans le dispositif (14) de réception.

12. Système (82) comprenant un système (10) de verrouillage suivant l'une des revendications 1 à 11 précédentes.
